# EUROPÄISCHE PATENTSCHRIFT

(11) **EP 1 286 771 B1**
(45) Veröffentlichungstag und Bekanntmachung des Hinweises auf die Patenterteilung: **07.06.2006**
(21) Anmeldenummer: 01927767.2
(22) Anmeldetag: 21.03.2001
(51) Int. Cl.: B01L 3/00, G01N 33/53, C12Q 1/68

(54) **MIKROHYBRIDISIERUNGSKAMMER**
MICROHYBRIDISATION CHAMBER
CHAMBRE DE MICROHYBRIDATION

(30) Priorität: 22.03.2000 DE 10014204
(43) Veröffentlichungstag der Anmeldung: 05.03.2003
(73) Patentinhaber: Max-Planck-Gesellschaft zur Förderung der Wissenschaften e.V., 80539 München (DE)
(72) Erfinder: TANDON, Neeraj, 10627 Berlin (DE); EICKHOFF, Dr. Holger, 28857 Syke (DE); LEHRACH, Hans, Prof. Dr., 14129 Berlin (DE)
(74) Vertreter: Hertz, Oliver
(86) Internationale Anmeldenummer: PCT/EP2001/003210
(87) Internationale Veröffentlichungsnummer: WO 2001/070399

(56) Entgegenhaltungen:
- EP-A- 0 279 097
- WO-A-97/45730
- US-A- 4 010 554
- US-A- 4 109 431
- US-A- 5 100 626
- US-A- 5 352 609

## Beschreibung

Die Erfindung betrifft allgemein eine Probenkammer für die Flüssigkeitsbehandlung mindestens einer Probe, insbesondere eine Probenkammer zur Fluidbehandlung einer Vielzahl von Proben, wie z. B. eine Mikrohybridisierungskammer.

In der Gentechnik und Biochemie ist es allgemein bekannt, mit sog. DNA-Chips Proben aus genetischen Materialien zu untersuchen. Auf einem DNA-Chip sind mehrere tausend mikroskopisch kleine Proben arrayartig auf einer Trägerplatte angeordnet. Die Proben enthalten die zu untersuchenden Biomoleküle, bspw. DNA, RNA, Proteine oder Antikörper. Die Proben können bereits markiert sein, wenn sie später z. B. nach einer Reaktion oder anderweitigen Veränderung mit optischen Methoden detektiert werden sollen. Übliche Detektionsverfahren sind Messungen der Fluoreszenz, Chemolumineszenz oder Radioaktivität. Für andere Detektionsverfahren, wie z. B. Massenspektrometrie, Absorptionsmessungen, oder Adsorptionsmessungen können die Probenmoleküle auch unmarkiert sein. Die Zielmolekülanordnung auf der Trägerplatte wird mit einer Testlösung überschichtet, die die Probenmoleküle enthält. Bei Hybridisierung von bestimmten Probenmolekülen aus der Testlösung an die auf der Trägerplatte immobilisierten Zielmoleküle kann an den entsprechenden Zielmolekülen ein Signal gemessen werden, dass typischerweise ein Fluoreszenzsignal ist.

Um mit einem einzelnen Chip eine möglichst große Anzahl von Proben parallel verarbeiten zu können, wurde in der DNA-Chip-Technologie bisher das Hauptaugenmerk auf die reproduzierbare und genaue, hochdichte Ablage von Proben auf der Trägerplatte gerichtet. Im praktischen Einsatz wurde die, bspw. mit einem Picking-/Spotting-Roboter beschickte, Trägerplatte mit der Testlösung überschichtet und die Testlösung mit einem Deckglas abgedeckt. Das Deckglas, wie es bspw. aus der Mikroskopie bekannt ist, ist ein Plättchen mit einer möglichst geringen Dicke, das auf der Testlösung aufschwimmt und über die Oberflächenspannung über der Trägerplatte mit Abstand von den Proben gehalten wird. Diese herkömmliche Technik der Kombination einer Trägerplatte mit einem dünnen Deckglas besitzt den Vorteil eines geringen Testlösungsverbrauchs im Bereich von 10 µl bis 20 µl pro Chip. Sie besitzt aber auch die im Folgenden erläuterten wichtigen Nachteile.

Der Probendurchsatz an einem DNA-Chip ist bisher durch die mit den gegenwärtig verwendeten Robotern erzielbare Probendichte beschränkt. Es besteht aber in der modernen molekularen Genetik ein starkes Interesse an einer weiteren Erhöhung des Probendurchsatzes (Zahl der pro Experiment bzw. pro Zeileneinheit behandelten oder verwendeten Proben). Ein weiterer Nachteil besteht darin, dass ein Verbund aus beschickter Trägerplatte, überschichteter Testlösung und Deckglas schwer zu handhaben ist. Eine automatisierte Manipulierung des Gesamtaufbaus, z. B. für eine reproduzierbare und gleichmäßige Zufuhr der Testlösung, ist ausgeschlossen.

Zur Fluidbehandlung von Proben sind auch flache, schichtförmige Küvetten bekannt, die geschlossene Probenkammern bilden und insbesondere für optische Messungen durch die Küvetten ausgelegt sind. Derartige Küvetten besitzen zwar den Vorteil einer hohen Stabilität und entsprechend guten Handhabbarkeit. Ihre Anwendung als DNA-Chip ist jedoch ausgeschlossen, da die inneren Küvettenwände nicht zur Probenablage mit der allgemein verwendeten Spotting-Technik ausgelegt sind.

Die genannten Probleme treten nicht nur bei Aufgaben der molekularen Genetik auf. Auch für die Fluidbehandlung trägergebundener Einzelproben besteht ein Interesse an Probenkammern, die eine schnelle und einfache Handhabung der Probe gewährleisten und dennoch einen stabilen, zuverlässigen Aufbau besitzen.

Aus der Patentanmeldung WO 97/45730 A ist eine Vorrichtung mit zwei planparallelen Glasplatten, die beide mit Proben bzw. Reagenzienmatrizen versehen sind, bekannt.

Aus dem US-Patent US-A-5 100 626 ist eine Verbundprobenvorrichtung bekannt, die eine bewegliche Kassette mit einer Anordnung von parallelen Kanälen für Mehrfachproben vorsieht.

US-Patent US-A-5 352 609 offenbart eine Einsatzkassette zum Herausarbeiten von gereinigten Nukleinsäuren aus Zellen, die eine Dialysekammer und einen Filter in der Dialysekammer umfasst.

Im US-Patent US 4 010 554 ist eine Vorrichtung zur Präparation und visuellen Präsentation von Organproben in Form von anatomischen Schnitten beschrieben. Die Organproben werden zwischen zwei Deckplatten angeordnet, mit denen eine flüssigkeitsdichte Kammer gebildet wird.

Es ist die Aufgabe der Erfindung, eine verbesserte Probenkammer zur Flüssigkeitsbehandlung mindestens einer trägergebundenen Probe anzugeben, die einen einfachen und stabilen Aufbau besitzt und eine Probenhandhabung und -behandlung unter reproduzierbaren Bedingungen gewährleistet. Die Probenkammer soll auch eine sichere Handhabung von radioaktiv markierten Probenlösungen ermöglichen. Die Probenkammer soll insbesondere für eine Erhöhung des Probendurchsatzes ausgelegt sein und die Untersuchung von Proben nach Wechselwirkung mit einer Testlösung erleichtern. Die Aufgabe der Erfindung ist es auch, ein Verfahren zur Durchführung gentechnischer Untersuchungen mit DNA-Chips anzugeben.

Diese Aufgaben werden durch eine Probenkammer und ein Verfahren mit den Merkmalen gemäß Anspruch 1 bzw. 14 gelöst. Vorteilhafte Ausführungsformen und Verwendungen der erfindungsgemäßen Probenkammer ergeben sich aus den abhängigen Ansprüchen.

Die Grundidee der Erfindung besteht in der Schaffung einer Probenkammer aus einer Trägerplatte und einer Deckplatte, die durch einen Abstandshalter in Form eines am Rand der zueinanderweisenden Flächen der Träger- und Deckplatten umlaufenden Streifens voneinander getrennt angeordnet sind, wobei in den Abstandhaltern mindestens ein Fluidanschluss integrierbar ist und der Aufbau aus Träger- und Deckplatten und dem Abstandshalter durch eine flüssigkeitsdichte Folie zusammengehalten wird, wobei die Trägerplatte und die Deckplatte dieselbe Größe besitzen. Die Folie wird durch mindestens einen Folienstreifen gebildet, der als umlaufender Umschlag die Ränder der Träger- und Deckplatten und den Abstand zwischen den Platten abdeckt. Gemäß einer bevorzugten Ausführungsform der Erfindung ist auf dem Verbund zwischen den Platten und der Folie eine Wachsabdichtung vorgesehen. Die Wachsabdichtung umfasst eine Wachsschicht, die mindestens den auf den Platten aufliegenden Rand der umlaufenden Folie abdeckt.

Die Träger- und Deckplatten, die dieselbe Größe besitzen, und der Abstandshalter sind an sich separate Bestandteile der Probenkammer, die als Verbund (SandwichAufbau) lediglich durch die flüssigkeitsdichte Folienverbindung zusammengehalten und ggf. durch die Wachsabdichtung abgedichtet wird. Der Abstandshalter kann eine derart geringe Dicke besitzen, dass die erfindungsgemäße Probenkammer im Wesentlichen ein Kammervolumen entsprechend einer Testlösungsmenge besitzt, wie sie auch bei den herkömmlichen DNA-Chips mit freiem Deckglas verwendet wird. Im Unterschied zu den herkömmlichen Chips wird jedoch ein stabiler und dichter Aufbau geschaffen, der sich als Ganzes zuverlässig handhaben lässt. Des weiteren erfüllt die Deckplatte im Unterschied zu herkömmlichen DNA-Chips nicht nur eine Abdeckfunktion. Die Deckplatte ist, insbesondere zur Erhöhung des Probendurchsatzes, selbst wie die Trägerplatte als Träger einer weiteren Probenanordnung und/oder als Träger einer optischen Filtereinrichtung ausgelegt.

Eine erste Ausführungsform der erfindungsgemäßen Probenkammer, bei der die Deckplatte eine Probenanordnung (z. B. DNA-Array) trägt, besitzt den Vorteil, dass bei einer Testlösungsbeschickung parallel gleich zwei Experimente durchgeführt werden können. Der Probendurchsatz verdoppelt sich. Zusätzlich ist von Vorteil, dass die Reaktionsbedingungen für beide Probenanordnungen jeweils auf der Träger- bzw. Deckplatte identisch sind.

Auch bei der zweiten bevorzugten Ausführungsform der Erfindung, bei der die Deckplatte mindestens einen optischen Filter trägt, ergibt sich eine Erhöhung des Probendurchsatzes. Fluoreszenzmessungen an den träger- und/oder deckplattengebundenen Proben können ohne Weiteres durch eine einfache Lichtdetektion (Abbildung der Deckplatte) durchgeführt werden. Die Messzeit verringert sich gegenüber den herkömmlichen Fluoreszenzmessungen an den DNA-Chips. Pro Zeiteinheit können mehr Proben zur Reaktion gebracht werden. Vorteilhafter Weise wird eine Online-Detektion ermöglicht.

Gegenstand der Erfindung ist anwendungsabhängig eine Probenkammer mit oder ohne Medienanschluss. Eine Probenkammer ohne Medienanschluss kann als vorkonfektionierter Reaktionsansatz bereitgestellt werden, der erst bei Einsatz z. B. mit Fluidanschlüssen versehen wird.

Bei Einsatz einer geeigneten Abbildungstechnik, die eine getrennte Fokussierung auf die zum Kammerinneren weisenden Flächen der Träger- und Deckplatten ermöglicht, kann die Deckplatte sowohl auf der Innenseite eine Probenanordnung als auch auf der Außenseite eine Filteranordnung tragen. Die Deckplatte kann auch selbst durch ein Filtermaterial gebildet werden.

Ein besonderer Vorteil der Erfindung ist die Stabilität des lediglich durch einen Folienstreifen zusammengehaltenen Verbundes aus Platten und Abstandshaltern. Dies ermöglicht die Kombination der Probenkammer mit anwendungsabhängig gestalteten Halterungseinrichtungen. Als Halterungseinrichtung ist bspw. ein Thermoblock vorgesehen, in den die Probenkammer wie in einen Rahmen eingespannt werden kann. Der Thermoblock enthält eine Heizeinrichtung zur Einstellung einer bestimmten Reaktionstemperatur in der Probenkammer. Bei einer alternativen Gestaltung wird die Probenkammer mit einer Kante an einer schwenkbaren Halterungsleiste befestigt. Dies ermöglicht ein an sich bekanntes Verschwenken der Probenkammer während der Beschickung mit der Testlösung und/oder während der Reaktion, ohne dass es zu Stabilitätsproblemen kommt. Dies ist insbesondere bei gentechnischen Aufgaben für eine gleichmäßige Hybridisierung von Vorteil.

Die Erfindung besitzt die folgenden Vorteile. Mit an sich einfachen und mit der üblichen Labortechnik kompatiblen Mitteln wird eine Probenkammer zur Fluidbehandlung geschaffen, die hinsichtlich der Stabilität, der Handhabbarkeit, der Brauchbarkeit und des Probendurchsatzes den herkömmlichen DNA-Chips weit überlegen ist. Die Reaktionsbedingungen sind für alle Proben ausgeglichen und unabhängig von etwaigen manuellen Einflüssen des Experimentators. Die erfindungsgemäße Probenkammer ist für den Einsatz in einem automatisierten System und zur Kombination mit verschiedenen Detektionsverfahren, insbesondere optischen Messungen, Aktivitätsmessungen, Oberflächenplasmonenresonanzmessungen und dgl., geeignet.

Weitere Vorteile und Einzelheiten der Erfindung werden im Folgenden unter Bezug auf die beigefügten Zeichnungen beschrieben. Es zeigen:
- Figur 1: eine erste Ausführungsform einer erfindungsgemäßen Probenkammer in Schnittansicht,
- Figur 2: eine zweite Ausführungsform der erfindungsgemäßen Probenkammer in Schnittansicht,
- Figur 3: eine Draufsicht auf eine erfindungsgemäße Probenkammer,
- Figur 4: eine schematische Illustration einer temperierbaren Halterungseinrichtung, und
- Figur 5: eine schematische Perspektivansicht einer verschwenkbaren Halterungseinrichtung.

Die Erfindung wird im Folgenden am Beispiel einer Mikrohybridisierungskammer für gentechnische Aufgaben erläutert, ohne jedoch auf diese Anwendung beschränkt zu sein. Die Realisierung der Erfindung ist insbesondere bei allen Verfahren anwendbar, bei denen die Wechselwirkung von trägergebundenen Proben (Einzelproben oder Probenanordnungen), wie z. B. Chromosomen (in situ Hybridisierungen) oder Gewebe (Immunostaining), einer Fluidbehandlung unterzogen werden.

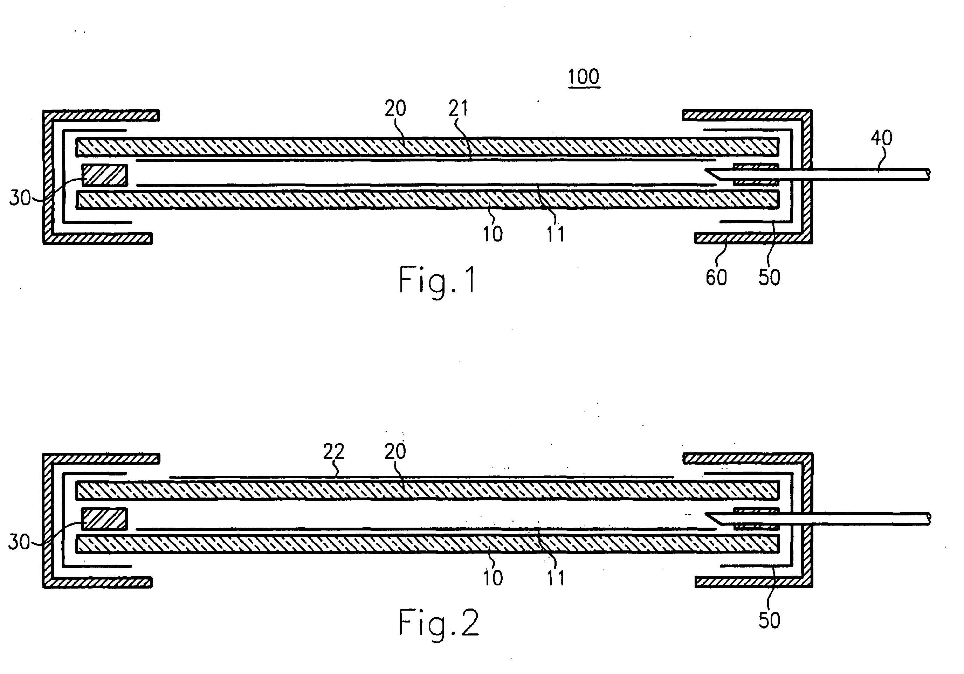

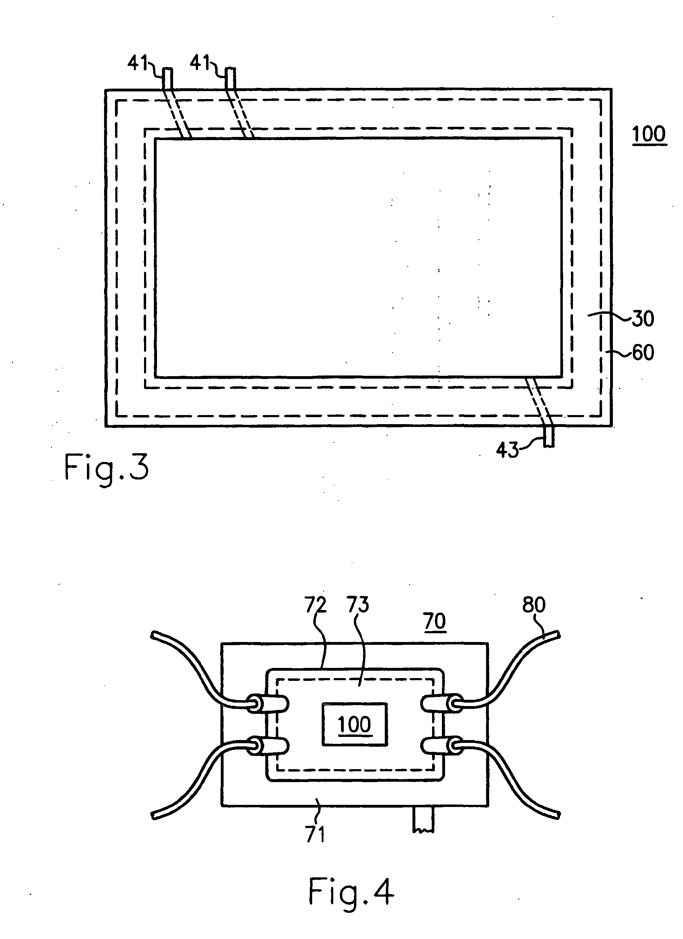

Figur 1 illustriert in schematischer Schnittansicht eine erste Ausführungsform einer erfindungsgemäßen Probenkammer 100. Aus Übersichtlichkeitsgründen sind einzelne Bauteile der Probenkammer 100 schematisch voneinander beabstandet gezeichnet, obwohl sie in der Realität formschlüssig und zum Teil flüssigkeitsdicht aneinander liegen. Die Probenkammer 100 wird durch die Grundplatte 10, die Deckplatte 20 und den Abstandshalter 30 gebildet, in den mindestens ein Medienanschluss 40 eingelassen ist. Der Medienanschluss ist ein Fluid- oder Gasanschluss. Eine Draufsicht auf den Verbund aus Träger- und Deckplatten 10, 20 und der Folie 50 ist in Figur 3 illustriert. Die Trägerplatte 10 ist eine ebene Glasplatte mit einer Fläche im Bereich von ca. 20 mm 20 mm bis ca. 80 mm 120 mm. Sie trägt auf der zum Kammerinneren weisenden Seite eine Probenanordnung 11. Die Probenanordnung 11 ist bspw. ein DNA-Array. Die Proben werden vor der Reaktion im auseinander gebauten Zustand der Probenkammer 100 auf die Trägerplatte 10 mit an sich bekannten Verfahrensweisen (z. B. Spotting) aufgebracht und enthalten bspw. jeweils ein DNA-Molekül oder - Abschnitt. Die Trägerplatte 10 besitzt in der Regel den selben Aufbau wie ein Substrat bei herkömmlichen DNA-Chips oder Hybridisierungskammern. Die Dicke der Trägerplatte 10 beträgt ca. 0.1 mm bis 2 mm. Die Deckplatte 20 ist bei der in Figur 1 dargestellten Ausführungsform wie die Trägerplatte 10 eine Glasplatte mit einer auf der zum Kammerinneren weisenden Seite aufgebrachten Probenanordnung 21. Die Träger- und Deckplatten 10, 20 sind bei dieser Gestaltung identisch. Die Probenanordnungen 11, 21 können bspw. DNA-Arrays, Protein-Arrays oder Immuno-Arrays umfassen.

Zwischen den Platten 10, 20 ist der Abstandshalter 30 angeordnet. Der Abstandhalter 30 besitzt die Form eines an den Rändern der Plattenoberflächen umlaufenden Streifens. Der Streifen besteht bspw. aus Siliconkautschuk oder PMMA und besitzt eine Breite von 1 mm bis 3 mm bzw. eine Dicke von ca. 0.05 bis 1.0 mm. Die Dicke des Abstandshalters 30 ist an die jeweiligen Versuchsbedingungen angepasst und vorzugsweise so gewählt, dass ein nadelförmiger Fluidanschluss 40 ohne Berührung der angrenzenden Platten durch den Abstandshalter durchgestoßen werden kann. Von besonderem Vorteil ist es, dass zwischen dem Abstandshalter 30 und den angrenzenden Platten 10, 20 lediglich ein formschlüssige Berührung gegeben sein muss. Es ist nicht zwingend erforderlich, dass eine flüssigkeitsdichte Verbindung ausgebildet wird. Dementsprechend ist es auch nicht zwingend erforderlich, dass der Abstandshalter 30 aus einem einstückigen, umlaufenden Streifen gebildet wird. Er kann auch aus mehreren Teilstücken, deren Enden bündig aneinander liegen, zusammengesetzt sein.

Der Medienanschluss 40 wird vorzugsweise durch mindestens eine Injektionsnadel gebildet. So zeigt bspw. die Draufsicht gemäß Figur 3 drei Injektionsnadeln 41, 42 und 43 zur Fluidzufuhr (Injektion einer Testlösung) bzw. zur Fluidabfuhr und zum Auslass des bei der Fluidzufuhr aus der Probenkammer verdrängten Gases. Eine Injektionsnadel 41 besitzt bspw. einen Außendurchmesser von ca. 0.04 mm bis 0.4 mm.

Die Folie 50 verschließt den Plattenaufbau flüssigkeitsdicht entlang seinen Rändern. Die Folie 50, die ggf. aus mehreren einander überlappenden Folienstreifen besteht, bildet an jeder Seite der Probenkammer 100 einen Umschlag mit U-förmigem Querschnitt, der die angrenzenden Ränder der Träger- und Deckplatten 10, 20 und den durch den Abstandshalter 30 gebildeten Zwischenraum abdeckt. Die Folie 50 besteht vorzugsweise aus einem selbstklebenden Folienmaterial (z. B. sog. Parafilm "M", Hersteller: "Laboratory Film", American National Can Chicago, USA ). Es kann aber auch ein Folienstreifen mit einer Klebeschicht vorgesehen sein. In diesem Fall muss jedoch ein Flüssigkeitsaustausch zwischen dem Inneren der Probenkammer und der Folie 50 ausgeschlossen sein.

Figur 1 zeigt zusätzlich noch eine Abdichtungsschicht 60, die die Folie 50 an den Rändern der Platten 10, 20 bedeckt. Die Abdichtungsschicht 60 ist kein zwingendes Merkmal der Erfindung. Sie wird jedoch mit Vorteil zur weiteren Erhöhung der Dichtsicherheit an den Kammerrändern eingesetzt. Die Aufbringung der Abdichtungsschicht 60 erfolgt bspw., indem die Probenkammer 100 mit ihren Kanten, die mit der Folie 50 verschlossen sind, in ein Wachsschmelzbad getaucht wird. Der Abdichtungswachs kann aus jeder geeigneten Wachs- und/oder Paraffinmischung, z. B. aus Haushaltskerzenwachs bestehen.

Figur 2 zeigt eine alternative Ausführungsform der Erfindung, bei der die Probenkammer 100 im Wesentlichen den gleichen Aufbau besitzt wie bei der Ausführungsform gemäß Figur 1. Der Unterschied bezieht sich lediglich auf die Deckplatte 20, die eine Filtereinrichtung 22 trägt. Die Filtereinrichtung 22 ist schematisch als äußere Beschichtung dargestellt. Ein optisches Filtermaterial kann ersatzweise auch im Inneren der Probenkammer 100 angebracht sein. Die Deckplatte 20 kann auch selbst aus dem Filtermaterial bestehen.

Die Filtereinrichtung 22 ist vorzugsweise ein Mehrfach-Bandpass-Filter (z. B. ein Doppel-Bandpass-Filter), der für mindestens zwei (z. B. vier oder mehr) getrennte Lichtwellenlängen durchlässig ist. Dies erlaubt die Detektion verschiedener Fluoreszenzmarker, die je nach dem Reaktionsergebnis an bestimmten Proben gebunden werden.

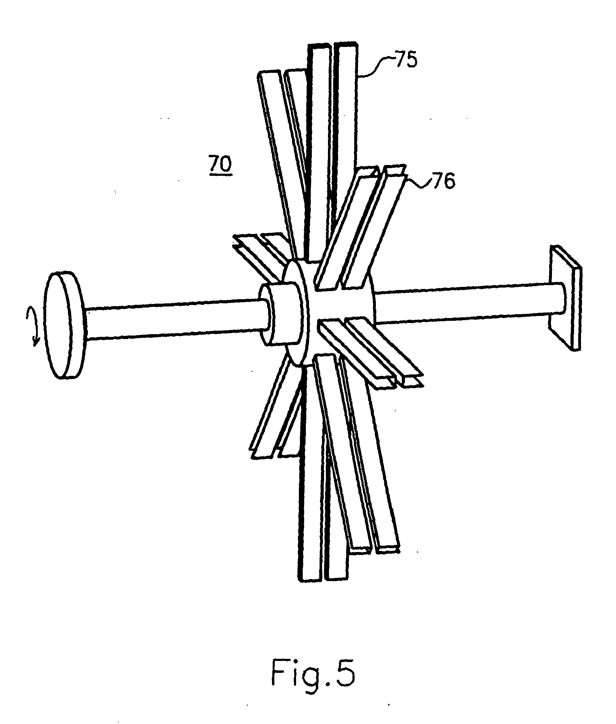

Die Figuren 4 und 5 illustrieren verschiedene Formen von Halterungseinrichtungen, mit denen die erfindungsgemäße Probenkammer mit Vorteil verwendet wird. Die Halterungseinrichtung 70 gemäß Figur 4 umfasst einen Thermoblock 71, in den die Probenkammer 100 (gestrichelt gezeichnet) eingelassen ist. Die Probenkammer 100 wird auf dem Thermoblock 71 mit einem Aufsatz 72 festgehalten, der der Fixierung der Probenkammer 100 und der Ausrichtung von Anschlussleitungen 80 dient. Die Anschlussleitungen 80 sind mit den Fluidanschlüssen (z. B. 41 - 43) der Probenkammer 100 verbunden. Der Aufsatz 72 besitzt ein Fenster entsprechend der Größe der Probenanordnung auf der Trägerplatte und ggf. der Deckplatte. Durch das Fenster 73 erfolgt die Fluoreszenzdetektion an den Proben.

Für Aufgabenstellungen, bei denen es besonders auf eine gleichmäßige Verteilung einer Testlösung in der Reaktionskammer ankommt, ist die Halterungseinrichtung 70 gemäß Figur 5 vorgesehen. Die Halterungseinrichtung 70 umfasst mindestens eine Halterungsleiste 75, an der eine Probenkammer (nicht dargestellt) mit einer Seitenkante angeklemmt werden kann und die Proben eine horizontal ausgerichtete Drehachse verschwenkbar sind. Bei der in Figur 5 dargestellten Ausführungsform ist eine sternförmige Halterungseinrichtung 70 mit acht Paaren von Halterungsleisten 75, 76, ... vorgesehen, mit denen entsprechend simultan sechzehn Probenkammern verschwenkt werden können. Zur weiteren Erhöhung des Probendurchsatzes können eine Vielzahl derartiger sternförmiger Halterungseinrichtungen entlang einer gemeinsamen Welle angeordnet sein. Typische Schwenkgeschwindigkeiten liegen im Bereich von typischerweise 10 Umdrehungen je Minute.

Eine erfindungsgemäße Probenkammer wird wie folgt verwendet. Zunächst wird die Trägerplatte 10 und ebenfalls auch die Deckplatte 20 mit einer Probenanordnung entsprechend den o. g. Beispielen beschickt. Es werden bspw. ca. 100.000 Proben auf die Platten gespottet. Anschließend wird der Abstandshalter 30 (siehe Figur 1) auf die Trägerplatte 10 aufgelegt und die Deckplatte 20 auf den Abstandshalter 30 aufgelegt. Der Aufbau wird durch Anbringung der umlaufenden Folie 50 verschlossen. Anschließend wird die Probenkammer ggf. zusätzlich durch Eintauchen in eine Wachsschmelze abgedichtet.

Danach erfolgt die Beschickung durch Injektion einer Testlösung, die bspw. Test-DNA enthält. Hierzu wird die Folie 50 und der Abstandshalter 30 an vorbestimmten Positionen mit dem Fluidanschluss 40 durchstochen. Ein besonderer Vorteil der Erfindung ist dadurch gegeben, dass dieses Durchstechen ohne zusätzliche Abdichtungsvorkehrungen durchgeführt werden kann. Die Injektion erfolgt, wenn eine Probenkammer gemäß Figur 4 in einem Thermoblock verankert ist, über die Anschlussleitungen 80.

Anschließend erfolgt die eigentliche Reaktion zwischen der Testlösung und den Proben 11 bzw. 21 und/oder anwendungsabhängig ein Zuführen von Wasch- und/oder Detektionslösungen. Zum Auslesen des Reaktionsergebnisses wird die Probenkammer mit einer in Abhängigkeit vom verwendeten Markierungsfarbstoff gewählten Wellenlänge bestrahlt. Die Fluoreszenzdetektion erfolgt durch die Deckplatte 20.

Zur Fluoreszenzdetektion kann vorgesehen sein, dass wie bei herkömmlichen DNA-Chips die Probenanordnung 11 bzw. 21 punktweise von einem Anregungslaser abgescannt und synchron die Fluoreszenz gemessen wird. Es kann auch eine Anregung mit einer mit Emissionsfiltern ausgerüsteten Weißlichtquelle vorgesehen sein. Ersatzweise ist bei Verwendung der Filtereinrichtung 22 (siehe Figur 2) eine simultane Anregung aller Proben mit einem aufgefächerten Anregungslaser und eine parallele Detektion der Lichtemissionen durch die Filtereinrichtung 22 vorgesehen.

Gemäß einer Abwandlung der Erfindung kann die Probenkammer mit einer elektronischen Filtereinrichtung ausgestattet sein, die eine Elektronenoptik für massenspekroskopische Untersuchungen der Proben bildet.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Probenkammer (100) zur Fluidbehandlung mindestens einer Probe, wobei die Probenkammer (100)
- einen Aufbau aus einer Trägerplatte (10) für eine erste Probenanordnung (11) und einer Deckplatte (20) zur Abdeckung der ersten Probenanordnung umfasst, die durch einen Abstandshalter (30) voneinander getrennt angeordnet sind, wobei
- die Trägerplatte (10) und die Deckplatte (20) die gleiche Größe aufweisen, und
- der Abstandshalter (30) ein am Rand der zueinander weisenden Seiten der Träger- und Deckplatten (10, 20) umlaufender Streifen ist,
**dadurch gekennzeichnet, dass**
- der Aufbau aus Träger- und Deckplatten (10, 20) und Abstandshalter (30) durch eine am Rand der Probenkammer (100) umlaufende Folie (50) zusammengehalten wird, die durch mindestens einen Folienstreifen gebildet wird, der als umlaufender Umschlag die Ränder der Träger- und Deckplatten (10, 20) und den Abstand zwischen den Träger- und Deckplatten (10, 20) abdeckt.

2. Probenkammer gemäß Anspruch 1, bei der die Träger- und Deckplatten (10, 20) Glasplatten mit gleicher Form sind.

3. Probenkammer gemäß Anspruch 1 oder 2, bei der die Deckplatte (20) auf der zum Inneren der Probenkammer (100) weisenden Seite eine zweite Probenanordnung (21) trägt.

4. Probenkammer gemäß einem der vorhergehenden Ansprüche, bei der die Deckplatte (20) mit einer optischen Filtereinrichtung (22) versehen ist.

5. Probenkammer gemäß Anspruch 4, bei der die Filtereinrichtung einen Mehrfach-Bandpass-Filter umfasst, der dazu eingerichtet ist, mindestens zwei getrennte Lichtwellenlängen durchzulassen.

6. Probenkammer gemäß einem der vorhergehenden Ansprüche, bei der an den Rändern der Träger- und Deckplatten (10, 20) über der Folie (50) eine Abdichtungsschicht (60) vorgesehen ist.

7. Probenkammer gemäß Anspruch 6, bei der die Abdichtungsschicht (60) aus Wachs besteht.

8. Probenkammer gemäß einem der vorhergehenden Ansprüche, bei der mindestens ein Fluidanschluss (40) in den Abstandshalter (30) integriert ist.

9. Probenkammer gemäß Anspruch 8, bei der der Fluidanschluss (40) mindestens eine Injektionsnadel (41 - 43) umfasst.

10. Probenkammer gemäß einem der vorhergehenden Ansprüche, die mit einer Halterungseinrichtung (70) ausgestattet ist.

11. Probenkammer gemäß Anspruch 10, bei der die Halterungseinrichtung (70) einen Thermoblock (71) und einen Aufsatz (72) umfasst, der ein Fenster (73) zur Fluoreszenzmessung an den Proben in der Probenkammer (100) aufweist.

12. Probenkammer gemäß Anspruch 11, bei der die Halterungseinrichtung (70) mindestens eine verschwenkbare Halteleiste (75, 76) umfasst.

13. Probenkammer gemäß einem der vorhergehenden Ansprüche, die mit einer elektronischen Filtereinrichtung ausgestattet ist, die eine Elektronenoptik für massenspektroskopische Untersuchungen bildet.

14. Verfahren zur Durchführung einer chemischen Reaktion zwischen trägergebundenen Proben und einer Testlösung, mit den Schritten:
- Aufbringen der Proben auf einer Trägerplatte (10),
- Auflegen eines Abstandshalters (30) auf die Trägerplatte (10) und
- Auflegen einer Deckplatte (20) auf den Abstandshalter (30),
**gekennzeichnet durch** die Schritte:
- Bildung eines flüssigkeitsdichten Verbundes aus den Träger- und Deckplatten (10, 20) und dem Abstandshalter (30) mit einer die Plattenränder und den Abstand zwischen den Platten umgreifenden Folie (50),
- Einstechen von mindestens einem Fluidanschluss (40) **durch** die Folie (50) und den Abstandshalter (30),
- Injektion der Testlösung in die **durch** die Träger- und Deckplatten (10, 20) und den Abstandshalter (30) gebildeten Probenkammer (100),
- Wechselwirkung zwischen der Probe und der Testlösung unter vorbestimmten Reaktionsbedingungen, und
- Fluoreszenzmessung an den trägergebundenen Proben zur Erfassung des Reaktionsergebnisses.

15. Verfahren gemäß Anspruch 14, bei dem nach Verschließen der Probenkammer (100) mit der Folie (50) die Ränder der Probenkammer (110) in ein Wachsschmelzbad getaucht werden, um eine Abdichtungsschicht (60) an den Kammerrändern zu bilden.

16. Verfahren gemäß Anspruch 14 oder 15, bei dem zur Einstellung bestimmter Reaktionsbedingungen eine Temperierung oder ein Verschwenken der Probenkammer (100) erfolgt.

17. Verwendung einer Probenkammer oder eines Verfahrens gemäß einem der vorhergehenden Ansprüche für die Untersuchung der Wechselwirkung von DNA-Fragmenten mit Test-DNA-Moleküle, Hybridisierungsreaktionen, Immunostaining-Reaktionen und/oder in Kombination mit optischen Detektionen, massenspektroskopischen Untersuchungen oder Messungen von Oberflächenplasmonenresonanzen.

## Claims

1. Sample chamber (100) for the fluid treatment of at least one sample, wherein the sample chamber (100)
- has a structure comprising a support plate (10) for a first sample arrangement (11) and a cover plate (20) for covering the first sample arrangement, which are arranged separated from one another by a spacer (30), wherein
- the support plate (10) and the cover plate (20) have the same size, and
- the spacer (30) is a strip running around the edge of the sides of the support and cover plates (10, 20) facing one another,
**characterised in that**
- the structure comprising support and cover plates (10, 20) and spacer (30) is held together by a foil (50) running around the edge of the sample chamber (100), said foil being formed by at least one foil strip, which in the form of a circumferential envelope covers the edges of the support and cover plates (10, 20) and the space between the support and cover plates (10, 20).

2. Sample chamber according to Claim 1, wherein the support and cover plates (10, 20) are glass plates of the same shape.

3. Sample chamber according to Claim 1 or 2, wherein the cover plate (20) carries a second sample arrangement (21) on the side facing the interior of the sample chamber (100).

4. Sample chamber according to one of the preceding claims, wherein the cover plate (20) is provided with an optical filter unit (22).

5. Sample chamber according to Claim 4, wherein the filter unit comprises a multiple band-pass filter, which is configured to allow at least two separate light wavelengths to pass through.

6. Sample chamber according to one of the preceding claims, wherein a sealing layer (60) is provided over the foil (50) on the edges of the support and cover plates (10, 20).

7. Sample chamber according to Claim 6, wherein the sealing layer (60) is made of wax.

8. Sample chamber according to one of the preceding claims, wherein at least one fluid connection (40) is integrated into the spacer (30).

9. Sample chamber according to Claim 8, wherein the fluid connection (40) comprises at least one injection needle (41-43).

10. Sample chamber according to one of the preceding claims, which is fitted with a holder arrangement (70).

11. Sample chamber according to Claim 10, wherein the holder arrangement (70) comprises a unit heater (71) and a cover (72), which has a window (73) for fluorescence measurement on the samples in the sample chamber (100).

12. Sample chamber according to Claim 11, wherein the holder arrangement (70) comprises at least one swivelling holder rail (75, 76).

13. Sample chamber according to one of the preceding claims, which is fitted with an electronic filter unit, which forms an electron-optical unit for mass-spectroscopic studies.

14. Method for performing a chemical reaction between support-bound samples and a test solution, with the steps:
- application of the samples to a support plate (10),
- placement of a spacer (30) on the support plate (10) and
- placement of a cover plate (20) on the spacer (30),
**characterised by** the steps:
- formation of a liquid-tight composite comprising the support and cover plates (10, 20) and the spacer (30) with a foil (50) engaging around the plate edges and the space between the plates,
- piercing of at least one fluid connection (40) through the foil (50) and the spacer (30),
- injection of the test solution into the sample chamber (100) formed by the support and cover plates (10, 20) and the spacer (30),
- interaction between the sample and the test solution under predetermined reaction conditions, and
- fluorescence measurement on the support-bound samples to determine the reaction result.

15. Method according to Claim 14, wherein after closing the sample chamber (100) with the foil (50), the edges of the sample chamber (100) are immersed in a wax bath to form a sealing layer (60) at the chamber edges.

16. Method according to Claim 14 or 15, wherein the sample chamber (100) is swivelled or its temperature regulated to adjust specific reaction conditions.

17. Use of a sample chamber or a method according to one of the preceding claims for study of the interaction of DNA fragments with test DNA molecule, hybridisation reactions, immunostaining reactions and/or in combination with optical detection studies, mass-spectroscopic studies or measurement of surface plasmon resonances.

## Revendications

1. Chambre d'échantillon (100) pour le traitement fluide d'au moins un échantillon, la chambre d'échantillon (100)
- comprenant une structure constituée d'une plaque de support (10) pour une première disposition d'échantillon (11) et une plaque de recouvrement (20) pour recouvrir la première disposition d'échantillon qui sont séparées l'une de l'autre par un élément d'espacement (30),
- la plaque de support (10) et la plaque de recouvrement (20) présentant la même taille, et
- l'élément d'espacement (30) étant une bande circulaire sur le bord des côtés tournés l'un vers l'autre des plaques de support et de recouvrement (10, 20),
**caractérisée en ce que**
- la structure comprenant les plaques de support et de recouvrement (10, 20) et l'élément d'espacement (30) est maintenue par une feuille (50) circulaire sur le bord de la chambre d'échantillon (100) qui est formée par au moins une bande de feuille qui recouvre comme enveloppe circulaire les bords des plaques de support et de recouvrement (10, 20) et l'intervalle entre les plaques de support et de couvercle (10, 20).

2. Chambre d'échantillon selon la revendication 1, dans laquelle les plaques de support et de recouvrement (10, 20) sont des plaques de verre de même forme.

3. Chambre d'échantillon selon la revendication 1 ou 2, dans laquelle la plaque de recouvrement (20) porte sur le côté dirigé vers l'intérieur de la chambre d'échantillon (100), une deuxième disposition d'échantillon (21).

4. Chambre d'échantillon selon l'une quelconque des revendications précédentes, dans laquelle la plaque de recouvrement (20) est dotée d'un dispositif de filtrage optique (22).

5. Chambre d'échantillon selon la revendication 4, dans laquelle le dispositif de filtrage comprend un filtre passe-bande multiple qui est disposé de façon à laisser passer au moins deux longueurs d'ondes séparées.

6. Chambre d'échantillon selon l'une quelconque des revendications précédentes, dans laquelle est prévue sur les bords des plaques de support et de recouvrement (10, 20) une couche d'étanchéité (60) sur la feuille (50).

7. Chambre d'échantillon selon la revendication 6, dans laquelle la couche d'étanchéité (60) est en cire.

8. Chambre d'échantillon selon l'une quelconque des revendications précédentes, dans laquelle au moins un raccord de fluide (40) est intégré dans l'élément d'espacement (30).

9. Chambre d'échantillon selon la revendication 8, dans laquelle le raccord de fluide (40) comprend au moins une aiguille pour injection (41 à 43).

10. Chambre d'échantillon selon l'une quelconque des revendications précédentes, qui est dotée d'un dispositif de maintien (70).

11. Chambre d'échantillon selon la revendication 10, dans laquelle le dispositif de maintien (70) comprend un bloc thermique (71) et un couvercle (72) présentant une fenêtre (73) pour mesurer la fluorescence des échantillons dans la chambre d'échantillon (100).

12. Chambre d'échantillon selon la revendication 11, dans laquelle le dispositif de maintien (70) comprend au moins une barre de maintien pivotante (75, 76).

13. Chambre d'échantillon selon l'une quelconque des revendications précédentes, équipée d'un dispositif de filtrage électronique qui forme une optique électronique pour les analyses de spectre de masse.

14. Procédé de réalisation d'une réaction chimique entre des échantillons fixés sur un support et une solution test, comprenant les étapes consistant à :
- placer l'échantillon sur une plaque de support (10),
- mettre en place un élément d'espacement (30) sur la plaque de support (10) et
- placer une plaque de recouvrement (20) sur l'élément d'espacement (30), **caractérisé par** les étapes comprenant :
- la formation d'une composition étanche aux liquides constituée d'une plaque de support et d'une plaque de recouvrement (10, 20) et de l'élément d'espacement (30) avec une feuille (50) enveloppant les bords de la plaque et l'intervalle entre les plaques,
- l'insertion d'au moins un raccord fluide (40) au travers de la feuille (50) et de l'élément d'espacement (30),
- l'injection de la solution de test dans la chambre d'échantillon (100) formée par les plaques de support et de recouvrement (10, 20) et l'élément d'espacement (30),
- l'interaction entre l'échantillon et la solution de test dans des conditions réactionnelles prédéterminées, et
- la mesure de la fluorescence des échantillons fixés au support pour saisir les résultats de la réaction.

15. Procédé selon la revendication 14, dans lequel après avoir refermé la chambre d'échantillon (100) avec la feuille (50), les bords de la chambre d'échantillon (110) sont plongés dans un bain de cire fondue pour former sur les bords de la chambre, une couche d'étanchéité (60).

16. Procédé selon la revendication 14 ou 15, dans lequel s'effectue une climatisation ou un pivotement de la chambre d'échantillon (100), pour régler les conditions réactionnelles prédéterminées.

17. Utilisation d'une chambre d'échantillon ou d'un procédé selon l'une quelconque des revendications précédentes pour l'analyse de l'interaction des fragments d'ADN avec une molécule d'ADN test, des réactions d'hybridation, des réactions de coloration immunologique et/ou en combinaison avec des moyens de détection optiques, d'analyses par spectroscopie de masse ou des mesures de la résonance plasmonique de surface.
